# EUROPÄISCHE PATENTSCHRIFT

(11) **EP 4 014 822 B1**
(45) Veröffentlichungstag und Bekanntmachung des Hinweises auf die Patenterteilung: **22.05.2024**
(21) Anmeldenummer: 21207167.4
(22) Anmeldetag: 09.11.2021
(51) Int. Cl.: A47J 43/07, A47J 36/38

(54) **FILTERVORRICHTUNG FÜR EINE KÜCHENMASCHINE UND KÜCHENMASCHINE**
KITCHEN APPLIANCE AND FILTER DEVICE FOR A KITCHEN APPLIANCE
DISPOSITIF FILTRE POUR UN ROBOT DE CUISINE ET ROBOT DE CUISINE

(30) Priorität: 03.12.2020 DE 102020215267
(43) Veröffentlichungstag der Anmeldung: 22.06.2022
(73) Patentinhaber: Vorwerk & Co. Interholding GmbH, 42270 Wuppertal (DE)
(72) Erfinder: Thies, Felix, 42115 Wuppertal (DE); Lang, Torsten, 42657 Solingen (DE)
(74) Vertreter: Gille Hrabal Partnerschaftsgesellschaft mbB Patentanwälte

(56) Entgegenhaltungen:
- EP-A1- 1 393 665
- DE-U1-202019 102 320
- US-A- 1 794 940
- US-A- 1 942 900
- US-A1- 2005 223 906
- US-A1- 2010 270 285

## Beschreibung

Die Erfindung betrifft eine Küchenmaschine zum Zubereiten einer Speise in einem Speisenzubereitungsgefäß.

Heutige Küchenmaschinen haben einen Deckel, um zu vermeiden, dass der Benutzer in das Speisenzubereitungsgefäß hineingreift und sich an dem rotierenden Werkzeug verletzt. Der Deckel hat üblicherweise eine kreisrunde, zentrale Öffnung, die während einer Speisenzubereitung das Zufügen von Zutaten ermöglicht. Der Durchmesser dieser Öffnung ist eng begrenzt, damit ein Hineingreifen nicht möglich ist und auf diese Weise die Verletzungsgefahr minimiert ist.

Aus der Öffnung strömt insbesondere bei Garprozessen Dampf heraus. Dieser kann einerseits durch Kondensation an z. B. Küchenschränken oder in der Luft unerwünscht sein. Zum anderen ist der Dampf häufig mit Gerüchen behaftet, die zumindest in Wohnbereichen oft unerwünscht sind. Gerade in modernen, offenen Küchen ist eine Verringerung der freigesetzten Gerüche wünschenswert, um die restliche Wohnung möglichst wenig zu beeinträchtigen. Es besteht demnach Bedarf für eine möglichst geruchsneutrale Freisetzung des von Küchenmaschinen erzeugten Dampfs.

Die Publikation US 2005 / 0 223 906 A1 offenbart ein Rührbratgerät mit jeweils einer Heizvorrichtung an der Unterseite sowie an der Oberseite eines Speisenaufnahmegefäßes. Das Gerät umfasst ferner eine Vorrichtung zum Filtern und Desodorierung von Kochdämpfen. Die Publikation US 2010 10 270 285 A1 beschreibt eine intelligente Koch- und Backmaschine mit einem oberen Heizelement und einem unteren Heizelement sowie einer Gasfilterschicht aus Aktivkohle.

Demnach ist es die Aufgabe der Erfindung, eine weiterentwickelte Küchenmaschine bereitzustellen.

Die Aufgabe wird gelöst durch die Küchenmaschine gemäß Anspruch 1. Bevorzugte Ausgestaltungen sind in den Unteransprüchen angegeben.

Offenbart ist eine Filtervorrichtung für eine Küchenmaschine zum Filtern von Dampf aus einer Speisenzubereitung mit der Küchenmaschine. Die Filtervorrichtung weist an einer Unterseite der Filtervorrichtung eine Einströmöffnung für Dampf auf. Die Filtervorrichtung umschließt einen Raum zur Aufnahme eines Filtermaterials zum Filtern von Dampf. Die Filtervorrichtung ist so dimensioniert, dass die Filtervorrichtung eine kreisrunde Öffnung mit einem Durchmesser von 6 cm überdecken kann. Die Filtervorrichtung ist so beschaffen, dass die Filtervorrichtung nicht durch die Öffnung hindurchgeschoben werden kann. Die Filtervorrichtung weist eine größte Ausdehnung von maximal 22 cm, bevorzugt von maximal 15,5 cm, auf.

Dadurch, dass die Filtervorrichtung so dimensioniert ist, dass die Filtervorrichtung eine kreisrunde Öffnung mit einem Durchmesser von 6 cm überdecken kann, wird sichergestellt, dass eine ausreichende Menge des Filtermaterials in der Filtervorrichtung vorgesehen werden kann, um Dampf für wenigstens einen Kochvorgang ausreichend zu filtern. Ein Filterwechsel oder eine Filterreinigung während eines Kochvorgangs kann so vermieden werden. Andererseits vermeidet eine Begrenzung der größten Ausdehnung der Filtervorrichtung auf maximal 22 cm, bevorzugt auf maximal 15,5 cm, Filtermaterial in Randbereichen, in denen das Filtermaterial nicht nennenswert zur Filterung beiträgt und folglich in unnötiger Weise die Herstellungskosten erhöht. Darüber hinaus kann hierdurch das Risiko von Schimmelbildung besonders in peripheren Bereichen des Filtermaterials reduziert werden.

Im Betrieb tritt der Dampf in einer Art kanalisierten Strömung durch die Öffnung des Deckels einer Küchenmaschine aus und gelangt durch die Einströmöffnung in die Filtervorrichtung. Der Dampf durchströmt das Filtermaterial zu einem großen Teil im Bereich der Öffnung, also bezogen auf die Filtervorrichtung mittig. Mittig angeordnetes Filtermaterial wird daher am stärksten durchströmt. Es hat sich gezeigt, dass ab einer Ausdehnung der Filtervorrichtung von 22 cm das äußere Filtermaterial nicht oder nur noch in vernachlässigbarem Umfang zur Filtration beiträgt. Bei einer Ausdehnung von 15,5 cm trägt das äußere Filtermaterial in geringem Maße zum Filtrationsprozess bei und bei einer Ausdehnung von 22 cm noch weniger. Durch die angegebene Begrenzung der größten Ausdehnung der Filtervorrichtung trägt das Filtermaterial effektiv und im hohen Maße zur Filtration bei.

In einer Ausgestaltung hat die Filtervorrichtung eine größte Ausdehnung, die zwischen 12 cm und 22 cm liegt. Dies ermöglicht eine Filterkapazität für mehrere Kochvorgänge bei einer vergleichsweise hoch effizienten Nutzung des vorhandenen Filtermaterials. In einer Ausführungsform beträgt die größte Ausdehnung 12 cm, um das Filtermaterial hocheffizient einsetzen zu können.

Die Unterseite ist bei bestimmungsgemäßem Gebrauch unten angeordnet. Durch die Einströmöffnung kann zu filternder Dampf aus der Öffnung an der Unterseite in die Filtervorrichtung einströmen. Insbesondere strömt der zu filternde Dampf entlang einer senkrecht von unten nach oben verlaufenden Hauptströmungsrichtung in die Filtervorrichtung, durch die Filtervorrichtung hindurch und/oder aus der Filtervorrichtung heraus. Die Filtervorrichtung hat eine Mittelachse. Die Mittelachse erstreckt sich von der Unterseite zur Oberseite der Filtervorrichtung. Die Mittelachse ist von oben betrachtet mittig, d.h., zentral, zur Filtervorrichtung. Eine in die Draufsicht projizierte Fläche der Filtervorrichtung hat ein mittiges Zentrum, durch das sich die Mittelachse erstreckt. Die Mittelachse verläuft insbesondere parallel zur Hauptströmungsrichtung. Vorzugsweise verläuft die Hauptströmungsrichtung entlang der Mittelachse, insbesondere bei mittig angeordneter Einström- und Ausströmöffnung.

Die Filtervorrichtung ist geeignet, Dampf zu filtern. Die Filtervorrichtung kann ebenso geeignet sein, um Gerüche aus mit Gerüchen behafteter Luft oder Abluft aus einer Speisenzubereitung mit einer Küchenmaschine herauszufiltern, d. h. Luft mit Gerüchen zu filtern, die beim Zubereiten oder Verarbeiten der Speise mit oder ohne Hitze entstehen.

Die größte Ausdehnung ist die entlang einer geraden Linie gemessene maximale Erstreckung der Filtervorrichtung. Die Filtervorrichtung ist insbesondere so gestaltet, dass die größte Erstreckung parallel zur Horizontalebene verläuft. Die Horizontalebene ist senkrecht zur Hauptströmungsrichtung ausgerichtet.

Eine Filtervorrichtung, die so dimensioniert ist, dass die Filtervorrichtung eine kreisrunde Öffnung mit einem Durchmesser von 6 cm überdecken kann, hat eine Erstreckung von mehr als 6 cm. Eine Filtervorrichtung, die so beschaffen ist, dass die Filtervorrichtung nicht durch die Öffnung hindurchgeschoben werden kann, kann nicht zerstörungsfrei mit Handkraft durch die Öffnung gedrückt werden. Die Filtervorrichtung kann nicht vollständig durch die Öffnung hindurchgeschoben werden. Ein Einschieben oder Durchschieben eines Abschnitts der Filtervorrichtung in die Öffnung kann dagegen möglich sein. Insbesondere hat die Filtervorrichtung eine Struktur mit einer solchen Steifigkeit, dass eine Verformung nicht oder nur in einem derartig geringen Umfang möglich ist, dass die Filtervorrichtung auch bei Aufbringen einer manuellen Kraft stets von der Öffnung zurückgehalten wird. Die größte Ausdehnung beträgt vorzugsweise mehr als 7 cm, bevorzugt mehr als 9 cm. Auf diese Weise kann eine ausreichende Menge an Filtermaterial für mehr als einen einzigen Kochvorgang vorgesehen werden. In dieser Anmeldung weisen Maße eine Genauigkeit von 5% auf.

Die Unterseite kann eine in einer Horizontalebene gemessene Ausdehnung aufweisen, die der größten Ausdehnung entspricht, z. B. maximal 15,5 cm. Die Unterseite kann halbschalenförmig sein. Vorzugsweise ist die Unterseite U-förmig und/oder gekrümmt. Die Unterseite kann auch einen ebenen Bodenbereich umfassen. In einer anderen Ausführungsform umfasst die Unterseite einen nach unten hervorstehenden Vorsprung, der die Einströmöffnung vorzugsweise mittig aufweist. Der Vorsprung hat in einer Horizontalebene, d.h., quer zur Hauptströmungsrichtung oder Mittelachse gemessen, bevorzugt eine größte Ausdehnung, die geringer ist als die größte Ausdehnung der Filtervorrichtung. Der Vorsprung kann in der Unterseite durch abgerundete Kanten gebildet sein. Der Vorsprung kann in seinem flachsten Bereich eine Höhe zwischen 1 cm und 2,5 cm aufweisen. In einer Ausgestaltung beträgt die größte Ausdehnung des Vorsprungs maximal 15,5 cm. Die maximale Ausdehnung der Filtervorrichtung kann dann größer sein als die maximale Ausdehnung des Vorsprungs.

In einer Ausführungsform ist an der Unterseite ein nach unten ragender Einsteckbereich zum Einstecken in die Öffnung angeordnet. Der Einsteckbereich kann einen etwa kreiszylinderförmigen Außenquerschnitt aufweisen, der in Bezug auf eine Drehsymmetrieachse der Filtervorrichtung axial und/oder mittig angeordnet ist. Der Einsteckbereich kann als Rohr mit Kreisquerschnitt ausgeführt sein. Der Einsteckbereich kann eine gummierte, flexible und/oder mit einem haftenden Material beschichtete äußere Oberfläche aufweisen, sodass er beim Einstecken in die Öffnung eine gewisse Abdichtung ermöglicht. Auf diese Weise kann ein besonders großer Anteil des entstehenden Dampfes gefiltert werden.

In einer Ausführungsform ist die Einströmöffnung kreisrund und/oder in Bezug auf eine Drehsymmetrieachse oder Mittelachse der Filtervorrichtung mittig angeordnet. In einer Ausführungsform hat die Einströmöffnung einen Durchmesser von mindestens 4 cm, bevorzugt mindestens 5 cm, und/oder höchstens 11 cm, bevorzugt höchstens 9 cm. Dampf aus dem Kochvorgang kann auf diese Weise im Betrieb besonders zuverlässig in die Filtervorrichtung gelangen.

Die Filtervorrichtung umschließt den Raum zur Aufnahme des Filtermaterials. Das Filtermaterial kann auf diese Weise zuverlässig von einer zuzubereitenden Speise getrennt werden. Ein leichtes Wechseln des Filtermaterials wird so ebenfalls ermöglicht. Der Raum kann vollständig oder teilweise umschlossen sein, wie z. B. durch eine die Unterseite ausbildende Halbschale.

In einer Ausgestaltung ist die äußere Form der Filtervorrichtung im Wesentlichen drehsymmetrisch, vorzugsweise bezogen auf eine Hauptströmungsrichtung des Dampfes und/oder die Mittelachse der Filtervorrichtung. Drehsymmetrisch meint, dass die Filtervorrichtung bei verschiedenen Drehwinkeln, insbesondere bei beliebigen Winkeln, auf sich selbst abgebildet wird. Die Drehsymmetrie bezieht sich auf die äußere Kontur der Filtervorrichtung. Die Mittelachse entspricht insbesondere der Drehsymmetrieachse, was auch analog für die vorhergehenden und nachfolgend beschriebenen Ausführungsformen gilt. Die Hauptströmungsrichtung verläuft bei bestimmungsgemäßem Gebrauch senkrecht. Bei einer im Wesentlichen drehsymmetrischen Form sind kleinere Abweichungen von der drehsymmetrischen Form wie z. B. Bohrungen und Aussparungen für Befestigungsmittel oder beispielsweise ein Gitters in der Einströmöffnung nicht zu berücksichtigen. In einer Ausführungsform weist die Filtervorrichtung im Wesentlichen eine Grundform eines Ellipsoids auf, insbesondere die Grundform eines Rotationsellipsoids. Dabei ist die Filtervorrichtung insbesondere axial flacher als radial breit. Insbesondere kann die größte Ausdehnung des Ellipsoids durch einen senkrecht zur Hauptströmungsrichtung gemessenen Durchmesser des Ellipsoids vorgegeben sein. Es ist darüber hinaus grundsätzlich möglich und in einer Ausgestaltung vorgesehen, dass die äußere Form der Filtervorrichtung eine Kugelform ist. In einer Ausführungsform ist die äußere Form der Filtervorrichtung mit Bezug auf eine senkrecht zur Hauptströmungsrichtung des Dampfes und/oder horizontal verlaufende Mittelebene im Wesentlichen spiegelsymmetrisch geformt. Diese Gestaltung ermöglicht aufgrund der gleichen Abstände entlang des Umfangs ein besonders gleichmäßiges Durchströmen des Filtermaterials, sodass dessen Kapazität optimal ausgenutzt wird und eine lange Betriebsdauer der Filtervorrichtung möglich ist.

In einer Ausgestaltung ist die Ausdehnung der Filtervorrichtung, die Ausdehnung des Raums für das Filtermaterial und/oder die Ausdehnung einer Filtereinheit mit dem Filtermaterial quer zur Hauptströmungsrichtung größer als in Hauptströmungsrichtung, vorzugsweise mindestens um das 1,5-fache, bevorzugt mindestens um das 2-fache, und/oder höchstens um das 5-fache, bevorzugt höchstens um das 3-fache größer. Der Strömungswiderstand für den Dampf durch das Filtermaterial kann auf diese Weise vergleichsweise gering gehalten werden, so dass eine zuverlässige Dichtung durch einen Flüssigkeitsfilm erreicht werden kann.

In einer Ausgestaltung ist die Unterseite so geformt, dass die Filtervorrichtung an der Unterseite mit einer (insbesondere geschlossenen) umlaufenden Kontaktlinie oder Kontaktfläche auf einen ebenen oder trichterförmigen Untergrund aufliegen kann. Durch die Kontaktlinie oder Kontaktfläche bildet sich im Betrieb ein Flüssigkeitsfilm aus, der eine abdichtende Wirkung hat. Das Eigengewicht der mit Filtermaterial gefüllten Filtervorrichtung mit den genannten Mindestabmessungen ist hierfür ausreichend. Die Filtervorrichtung ermöglicht so im aufliegenden Zustand eine Abdichtung gegenüber einem Untergrund ohne zusätzliche Bauteile oder Abdichtungen. Die Filtervorrichtung kommt auf diese Weise auch ohne zusätzliche Befestigung aus. Im Betrieb und während eines Kochvorgangs wird auf diese Weise zusätzlich eine Überdruckbildung im Speisenzubereitungsgefäß verhindert. Flächiges Aufliegen ermöglicht die Ausbildung einer besonders effektiven Wasserfilmdichtung. Dabei gelangt kondensiertes Wasser aus dem Dampf zwischen die einander kontaktierenden Flächen des Filtervorrichtung und des die Öffnung ausbildenden Materials und dichtet auf einfache und effektive Weise den Innenraum des Speisenzubereitungsgefäßes und die Einströmöffnung gegenüber der Umgebung ab, sodass der entstehende Dampf möglichst vollständig durch die Filtervorrichtung geleitet wird. Je größer die Auflagefläche ist, desto größer ist die Dichtwirkung. Im Betrieb entspricht der Untergrund einer Oberfläche eines Deckels, die sich um die Öffnung herum erstreckt. Die äußere Kontur der Unterseite der Filtervorrichtung erlaubt es, eine geschlossene Kreislinie in einer insbesondere horizontalen Ebene insbesondere um eine Mittelachse der Filtervorrichtung zu ziehen, die beim Aufsetzen die Kontaktlinie bildet. Die äußere Kontur enthält einen Oberflächenabschnitt, der als umlaufende Kontaktfläche die Form eines sich über 360° um eine Mittelachse erstreckenden, geschlossenen Kreisrings hat. Der Kreisring wird radial durch zwei Kreislinien, wie oben beschrieben, begrenzt. Die Kontaktlinie oder Kontaktfläche erstrecken sich über den gesamten Umfang mit Bezug zur Hauptströmungsrichtung und/oder um die Mittelachse, sodass die Kontaktlinie oder die Kontaktfläche im Betrieb und bei bestimmungsgemäßem Gebrauch die Öffnung vollständig umschließen. Die Kontaktfläche ist bevorzugt kreisringförmig. Typischerweise ist der Bereich der Kontaktfläche glatt. Insbesondere ist der Mittenrauwert kleiner als 25 µm, bevorzugt kleiner als 3 µm. In einer Ausführungsform ist die Einströmöffnung in Umfangsrichtung vollständig von der Kontaktlinie oder Kontaktfläche umschlossen.

In einer Ausgestaltung weist die Filtervorrichtung ein Außengehäuse auf, in welchem der Raum ausgebildet oder angeordnet ist. Vorzugsweise ist das Außengehäuse aus Kunststoff. Das Außengehäuse umschließt den Raum zumindest teilweise. Es bildet die Unterseite aus. Es ist möglich, dass der Raum durch das gesamte Innenvolumen des Außengehäuses gebildet wird und/oder dieses Innenvolumen mit Filtermaterial oder einer Filtereinheit mit dem Filtermaterial ausgefüllt wird. Das Außengehäuse kann einteilig oder mehrteilig ausgebildet sein. Bei einem mehrteiligen Gehäuse können die Teile fest verbunden oder reversibel verbindbar sein. Insbesondere umfasst das Außengehäuse ein Gehäuseunterteil, das die Unterseite der Filtervorrichtung definiert. In einer Ausführungsform umfasst das Außengehäuse ein Gehäuseoberteil, welches eine Oberseite der Filtervorrichtung definiert. Das Gehäuseoberteil und/oder das Gehäuseunterteil kann darüber hinaus zumindest einen Teil einer seitlichen Oberfläche der Filtervorrichtung definieren. In einer Ausführungsform sind das Gehäuseoberteil und das Gehäuseunterteil als schalenförmige Elemente, auch als Halbschalen bezeichnet, ausgebildet.

Kunststoffe sind dauerhaft, leicht zu reinigen und weisen eine niedrige Wärmeleitfähigkeit auf. Die Filtervorrichtung kann so zum Reinigen von Dampf genutzt werden, ohne dass der Benutzer Gefahr läuft, sich bei Berührung zu verbrennen.

In einer Ausgestaltung weist die Filtervorrichtung ein Gehäuseoberteil mit einer Ausströmöffnung für gefilterten Dampf auf. Das Gehäuseoberteil bildet die Oberseite der Filtervorrichtung aus, die der Unterseite gegenüberliegen kann. Der Dampf durchströmt dabei die Filtervorrichtung von unten nach oben entlang der Hauptströmungsrichtung. Hierdurch wird bei geringem technischen Aufwand eine gleichmäßige und vollständige Durchströmung des Filtermaterials ermöglicht.

In einer Ausgestaltung weist die Filtervorrichtung ein Gehäuseunterteil mit der Einströmöffnung und/oder ein Gehäuseoberteil mit einer Ausströmöffnung für gefilterten Dampf auf. Ein besonders einfacher und robuster Aufbau wird so erzielt. In einer Ausgestaltung ist die Ausströmöffnung kreisrund und/oder in Bezug auf eine Drehsymmetrieachse und/oder Mittelachse der Filtervorrichtung mittig angeordnet. In einer Ausführungsform hat die Ausströmöffnung einen Durchmesser mindestens 4 cm, bevorzugt mindestens 5 cm, und/oder höchstens 11 cm, bevorzugt höchstens 9 cm. Bevorzugt entspricht der Durchmesser der Ausströmöffnung dem Durchmesser der Einströmöffnung. Durch die oben genannten Durchmesser wird eine besonders gleichmäßige Strömung des Dampfs gewährleistet.

In einer weiteren Ausgestaltung weist die Filtervorrichtung Verbindungsmittel auf, mit denen das Gehäuseoberteil und das Gehäuseunterteil insbesondere manuell lösbar mechanisch miteinander verbindbar sind. Mit anderen Worten können das Gehäuseoberteil und das Gehäuseunterteil in einer Schließstellung gehalten werden. In der Schließstellung umschließen das Gehäuseoberteil und das Gehäuseunterteil gemeinsam den Raum und halten das Filtermaterial. Die Verbindungsmittel können an dem Gehäuseoberteil und/oder dem Gehäuseunterteil angeordnet sein und/oder durch diese ausgebildet sein. In einer Ausführungsform können jeweilige Verbindungsmittel des Gehäuseoberteils und des Gehäuseunterteils direkt zusammenwirken, um die beiden Teile miteinander zu verbinden. In einer anderen Ausführungsform kann zwischen dem Gehäuseoberteil und dem Gehäuseunterteil ein Mittelteil angeordnet sein, an welchem die Verbindungsmittel zum Verbinden von dem Gehäuseoberteil und dem Gehäuseunterteil angeordnet oder ausgebildet sind. Das Mittelteil kann sowohl mit dem Gehäuseoberteil als auch mit dem Gehäuseunterteil mechanisch verbindbar oder verbunden sein. Das Mittelteil ist mit zumindest einer der Seiten reversibel verbindbar.

In einer Ausgestaltung umfasst das Verbindungsmittel einen Bajonettverschluss. Alternativ oder ergänzend kann ein Schraubverschluss oder Rastmittel zum formschlüssigen Verbinden vorgesehen werden, z. B. in Form eines Schnappverschlusses. Beispielsweise können ein Rastelement und eine zugehörige Rastaufnahme vorgesehen sein, die elastisch in Bezug zu einander beweglich sind. Bei Einsatz eines Bajonettverschlusses können das Gehäuseoberteil und das Gehäuseunterteil mittels einer translatorischen und/oder rotatorischen Relativbewegung von einer Öffnungsstellung in eine Schließstellung gebracht werden und umgekehrt.

In einer Ausgestaltung sind das Gehäuseoberteil und das Gehäuseunterteil baugleich oder weisen eine gleiche oder im Wesentlichen gleiche äußeren Form auf. Insbesondere im zusammengesetzten Zustand können sie symmetrisch in Bezug auf eine horizontale Ebene ausgebildet sein. Dabei sind geringfügige Abweichungen nicht zu berücksichtigen, etwa aufgrund sich unterscheidender Teile von Verbindungsmitteln. Eine reversible oder lösbare Verbindung ermöglicht ein manuelles Öffnen und Wiederverschließen durch den Benutzer, um das Filtermaterial auszutauschen.

In einer Ausgestaltung umfasst die Filtervorrichtung das in dem Raum angeordnete Filtermaterial zum Filtern des Dampfes. Das Filtermaterial kann Teil einer Filtereinheit sein, die in dem Raum positionierbar oder positioniert ist. Das Filtermaterial kann in einem zumindest bereichsweise dampfdurchlässigen Beutel als Filtereinheit angeordnet sein, der auf besonders einfache Weise in den Raum eingebracht und ggf. ausgetauscht werden kann. Die Filtervorrichtung kann demnach zur Aufnahme eines das Filtermaterial enthaltenden Beutels eingerichtet sein.

Das Filtermaterial kann eine Filterschüttung enthalten, also einen partikulären Feststoff, der insbesondere eine große innere Oberfläche aufweist. Das Filtermaterial kann ein oder mehrere Filterelemente enthalten, der oder die von Kanälen durchzogen sein kann. Das Filtermaterial kann einen Tiefenfilter und/oder einen Oberflächenfilter enthalten. Das Filtermaterial kann eine Filterschicht, ein Membranfilter und/oder ein Filtervlies, Filtergewebe, Filterpapier enthalten. Das Filtermaterial kann einen ggf. porösen Festkörper enthalten, der Strömungskanäle enthalten kann. In einer Ausgestaltung kann die Einströmöffnung und/oder Ausströmöffnung eine Pore sein. In einer Ausführungsform ist das Filtermaterial stoffschlüssig befestigt. Das Filtermaterial kann geklebt oder umspritzt sein und/oder als lose Schüttung vorliegen. Das Filtermaterial kann von zumindest einem und insbesondere zwei Gittern oder Membranen gehalten sein, wobei die Gitter oder Membranen dampfdurchlässig sind.

In einer Ausgestaltung ist das Filtermaterial in einer Filtereinheit angeordnet, die in dem Raum positionierbar oder positioniert ist. Die Filtereinheit verbessert die mittige und gleichmäßige Leitung des Dampfs und ermöglicht so ein vollständiges Durchströmen des vorhandenen Volumens des Filtermaterials. So werden Totzonen vermieden und die Kapazität des Filtermaterials wird optimal ausgenutzt.

Der Einsatz einer Filtereinheit mit einer manuell verformbaren, gasdurchlässigen Umhüllung ermöglicht darüber hinaus ein einfaches Wechseln der Filtereinheit und geringe Herstellungskosten. Der Einsatz einer Filtereinheit mit einem harten Filtergehäuse beispielsweise aus Kunststoff erlaubt ein Anordnen des Filtermaterials in einer Weise, dass der Dampf das Filtermaterial, insbesondere Aktivkohle, besonders gleichmäßig durchströmen kann. Die Filtereinheit und/oder das Filtergehäuse können im Wesentlichen drehsymmetrisch ausgebildet sein. Ein ringförmiger, flacher und/oder umlaufender Befestigungsabschnitt vorzugsweise aus Plexiglas kann radial an die Filtereinheit angrenzen, um die Filtereinheit mittig in Position zu halten und/oder um die oben beschriebenen Verbindungsmittel für die Gehäuseoberschale und/oder Gehäuseunterschale im Inneren der Filtervorrichtung zu fixieren. Der Befestigungsabschnitt kann von einem Außengehäuse der Filtervorrichtung gehalten werden. Der Befestigungsabschnitt hat insbesondere die Form eines Kreisrings, der insbesondere zentriert zur Mittelachse ist. Die Filtereinheit mit Filtergehäuse und/oder dem Befestigungsabschnitt kann einen Mittelteil bilden, der zwischen dem Gehäuseoberteil und dem Gehäuseunterteil angeordnet und/oder durch dessen angepasste Außenform in einer vorgesehenen Position gehalten werden kann.

In einer Ausgestaltung hat das Filtergehäuse der Filtereinheit eine zylinderförmige Außenkontur. Wenn die Filtereinheit in dem Raum der Filtervorrichtung aufgenommen ist, liegt die Zylinderachse des Filtergehäuses auf der Mittelachse der Filtervorrichtung. Vorzugsweise ist die geschlossene Mantelfläche der zylinderförmigen Außenkontur gasundurchlässig und/oder eine Struktur mit zur Mittelachse parallelen, vorzugsweise geradlinig verlaufenden Kanälen erstreckt sich von einer unteren Einströmseite zu einer oberen Ausströmseite. Die Kanäle sind durch Wandungen voneinander getrennt. Vorzugsweise verlaufen alle Kanäle parallel zu einander. Insbesondere bilden die Wandungen eine Wabenstruktur aus, so dass im Querschnitt betrachtet mehreckige Kanäle ausgebildet sind. Vorzugsweise sind mindestens 10 und/oder höchstens 20 Kanäle im Querschnitt betrachtet über den Durchmesser des Filtergehäuses nebeneinander angeordnet. Der Durchmesser des Filtergehäuses ist größer als dessen Höhe in Richtung der Mittelachse, vorzugsweise um das 1,5-Fache bis 2,5-Fache größer. Insbesondere entspricht der Durchmesser des Filtergehäuses mindestens dem 0,9-Fachen und/oder höchstens dem 1,2-Fachen, vorzugsweise dem 1-Fachen, des Durchmessers der Einströmöffnung und/oder der Ausströmöffnung. Der durch die Einströmöffnung in die Filtervorrichtung eintretende Dampf verteilt sich die Kanäle und wechselwirkt mit dem darin enthalten Filtermaterial. Insbesondere ist an der Einströmseite und/oder der gegenüberliegenden Ausströmseite ein Rückhaltelement wie z. B. ein Gitter oder eine Membran aus Gewebe zum Halten des Filtermaterials vorgesehen. In einer Ausgestaltung füllt das Filtermaterial das Filtergehäuse ohne eine innere Kanalstruktur aus und/oder ein wabenförmiges Gitter oder Netz erstreckt sich über die gesamte Einströmseite und/oder Ausströmseite zum Stützen eines Rückhalteelements und/oder zum Zurückhalten des Filtermaterials.

Wenn die Filtereinheit eine verformbare Umhüllung aufweist, füllt das Filtermaterial das Innere der Umhüllung aus, bevorzugt ohne eine innere Stützstruktur oder Kanalstruktur im Inneren der Umhüllung.

In einer Ausgestaltung umfasst die Filtervorrichtung als Filtermaterial Aktivkohle. Aktivkohle ist sehr effizient zur Entfernung von Gerüchen aus Dampf aus der Speisenzubereitung. Bei der Verwendung von Aktivkohle und einem Außengehäuse aus Kunststoff ist die aus den geometrischen Vorgaben resultierende Menge an Filtermaterial gut geeignet, ein Gesamtgewicht der Filtervorrichtung zu erzielen, welches eine ausreichende Abdichtung mit dem die Öffnung ausbildenden Material gewährleistet. Insbesondere wird granulierte Aktivkohle verwendet.

In einer weiteren Ausgestaltung erstreckt sich über die gesamte Einströmöffnung und/oder über die gesamte Ausströmöffnung ein Gitter. Das Gitter kann so ausgeführt sein, dass es mit dem Dampf mitgeführte Fett- und/oder Ölspritzer zumindest teilweise aus dem Dampf entfernt. Das Gitter kann als Teil eines Fettfilters ausgeführt sein, der so beschaffen ist, dass er fein verteilte Fett- und/oder Öltröpfchen aus dem Dampf entfernt. Das Gitter kann einen Metallfilter umfassen oder als ein solcher ausgestaltet sein. Das Gitter kann als Sieb, Netz oder Gewebe vorzugsweise aus Metalldraht oder als Streckmetall ausgebildet sein. Das Gitterkann eine oder mehrere Lagen umfassen. Alternativ oder ergänzend kann eine Vliesschicht zum Abscheiden von Fett oder Öl vorgesehen sein. Das Filtermaterial wird so vor Verunreinigungen geschützt und Schimmelbildung wird entgegengewirkt.

In einer Ausführungsform erstreckt sich ein Gitter, vorzugsweise ein Metallgitter, über die gesamte Einströmöffnung und/oder die gesamte Ausströmöffnung. Das Filtermaterial kann auf diese Weise besonders zuverlässig innerhalb der Filtervorrichtung gehalten werden. Zudem kann das Metallgitter eine zusätzliche Funktion erfüllen, und zwar zum Abhalten von Fettspritzern und Fetttröpfchen aus dem Dampf, die sich an dem Gitter absetzen. Insbesondere hat das Metallgitter eine Maschenweite von mindestens 0,5 mm und/oder höchstens 1 mm. Das Metallgitter kann eine äußere Kontur der Filtervorrichtung bilden.

In einer Ausgestaltung weist die Filtervorrichtung ein motorbetriebenes Gebläse auf. Gas wie Dampf oder Luft kann auf diese Weise aktiv in die Filtervorrichtung eingesaugt werden. Vorzugsweise ist der Motor für das Gebläse mithilfe eines Akkus betrieben.

Alternativ kann der Motor über elektrische Kontakte mit Energie versorgt werden, die an eine Steckdose oder an eine elektrische Schnittstelle einer Küchenmaschine angeschlossen werden können. In einer Ausgestaltung weist die Filtervorrichtung einen Speicher für Kondenswasser und/oder Löcher zum Abfließen von Kondenswasser auf.

Offenbart ist ferner eine Filtervorrichtung für eine Küchenmaschine zum Filtern von Dampf aus einer Speisenzubereitung mit der Küchenmaschine, wobei die Filtervorrichtung an einer Unterseite der Filtervorrichtung eine Einströmöffnung für Dampf aufweist, wobei die Filtervorrichtung einen Raum zur Aufnahme eines Filtermaterials zum Filtern von Dampf umschließt, wobei die Filtervorrichtung so dimensioniert ist, dass die Filtervorrichtung eine kreisrunde Öffnung mit einem Durchmesser von 6 cm überdecken kann und so beschaffen ist, dass die Filtervorrichtung nicht durch die Öffnung hindurchgeschoben werden kann, wobei die Filtervorrichtung eine größte Ausdehnung zwischen 22 cm und 50 cm aufweist. Dieser Aspekt, der dem Einsatz bei Extremanwendungen auf dem Gebiet der Speisenzubereitung dient, ermöglichst den Einsatz besonderer Filter zum Herausfiltern spezieller Inhaltsstoffe und/oder zur Erzielung einer besonders hohen Filterrate. Beispielsweise kann ein mehrlagiges Filtermaterial oder mehrere Schichten von unterschiedlichen Filtermaterialien eingesetzt werden, sodass der Dampf eine besonders große Filterfläche und/oder mehrere nacheinander geschaltete Filterstufen passiert. Die Filtervorrichtung kann nach oben hin im Querschnitt zunehmen, sodass eine größere Filterfläche und/oder ein größeres Filtervolumen zur Verfügung gestellt wird. Die Filtervorrichtung kann Leitelemente zum Verteilen der Dampfströmung im Inneren des Filtermaterials und/oder zwischen Einheiten des Filtermaterials aufweisen. Das Filtermaterial kann eine Filterschicht wie etwa ein Filtervlies, das beispielsweise gefaltet ist, und/oder eine Filterschüttung aufweisen. Das Filtermaterial kann Tiefenfilter und/oder Oberflächenfilter umfassen. Das Filtermaterial kann einen HEPA-Filter (High-Efficiency Particulate Air / Arrestance) umfassen, also einen hocheffizienten Schwebstofffilter, beispielsweise entsprechend der Klassifikation H13 oder H14 gemäß EN 1822-1:2009. Alle Merkmale, Ausführungsformen und Wirkungen der eingangs beschriebenen Filtervorrichtung können entsprechend auch für diesen Aspekt gelten.

Die Ausführungsformen zur Filtervorrichtung fallen nicht unter den Wortlaut der Ansprüche, werden aber als das Verständnis der Erfindung erleichternd angesehen.

Die Aufgabe wird gelöst durch eine Küchenmaschine zum Zubereiten einer Speise in einem Speisenzubereitungsgefäß. Die Küchenmaschine umfasst ein Heizelement zum Erhitzen einer Speise in dem Speisenzubereitungsgefäß und/oder ein Werkzeug zum Mischen oder Zerkleinern der Speise in dem Speisenzubereitungsgefäß. Sie umfasst ferner das abnehmbare Speisenzubereitungsgefäß. Die Küchenmaschine umfasst eine Filtervorrichtung zum Filtern von Dampf aus dem Speisenzubereitungsgefäß während eines Speisenzubereitungsvorgangs.

In einem nicht von der Erfindung umfassten Ausführungsbeispiel kann die Filtervorrichtung ein separates Teil sein, beispielsweise eine Filtervorrichtung gemäß dem eingangs beschriebenen Aspekt . Die Küchenmaschine kann einen Deckel zum Verschließen des Speisenzubereitungsgefäßes umfassen. Dieser kann eine insbesondere mittig angeordnete, kreisrunde Öffnung aufweisen, über welcher die Filtervorrichtung positioniert werden kann. Alle Merkmale, Ausführungsformen und Wirkungen der eingangs beschriebenen Filtervorrichtung können entsprechend auch für die Filtervorrichtung der Küchenmaschine gelten.

Die Filtervorrichtung kann in die Küchenmaschine integriert und so eingerichtet sein, dass Dampf, der während eines Speisenzubereitungsvorgangs aus dem Speisenzubereitungsgefäß entweicht, gefiltert werden kann. Die Filtervorrichtung hat insbesondere eine Einströmöffnung für zu filternden Dampf, ein Filtermaterial und eine Ausströmöffnung für gefilterten Dampf. Die Filtervorrichtung ist insbesondere so eingerichtet, dass das Filtermaterial ausgetauscht werden kann. Bevorzugt ist die Filtervorrichtung dazu von außen zugänglich. Sie kann in einem Gehäuse der Küchenmaschine angeordnet sein.

Die Küchenmaschine weist eine Absaugvorrichtung auf, mit der während eines Speisenzubereitungsvorgangs aus dem Speisenzubereitungsgefäß entweichender Dampf abgesaugt und zu der Filtervorrichtung geführt werden kann.

Im Betrieb entweicht der Dampf durch die Öffnung im Deckel des Speisenzubereitungsgefäßes. Insbesondere umfasst die Absaugvorrichtung eine in der Nähe der Oberseite des Speisenzubereitungsgefäßes angeordnete Absaugöffnung. Ein Abstand zwischen der Absaugöffnung und der Öffnung im Deckel des Speisenzubereitungsgefäß ist insbesondere kleiner sein als 15 cm, bevorzugt kleiner als 10 cm. Der Abstand ist definiert als die kürzeste Strecke zwischen einem Rand der Öffnung und einem nächstgelegenen Bereich der Absaugöffnung, beispielsweise einem die Absaugöffnung verschließenden Abluftgitter. Durch derartig geringe Abstände kann der Dampf energiesparend abgesaugt werden, Geräuschemission reduziert und eine sehr effiziente Dampfreinigung erfolgen.

Die Absaugvorrichtung umfasst insbesondere ein Gebläse zum Fördern eines den Dampf enthaltenden Luftstroms. Das Gebläse kann von einem Elektromotor angetrieben sein. Das Gebläse ist dazu eingerichtet, den Dampf anzusaugen und durch die Filtervorrichtung zu fördern. Die Küchenmaschine weist insbesondere einen Abluftkanal zum Auslassen des Dampfs aus der Küchenmaschine auf. Die Filtervorrichtung ist bevorzugt stromabwärts des Gebläses angeordnet. Das Gebläse hat hierdurch eine erhöhte Lebensdauer. Alternativ kann die Filtervorrichtung stromaufwärts vom Gebläse angeordnet sein.

In einer Ausgestaltung weist die Küchenmaschine einen Elektromotor zum Antreiben des Werkzeugs auf, der auch zum Antreiben eines Gebläses der Absaugvorrichtung eingerichtet ist. Der Elektromotor kann somit für beide Funktionen eingerichtet sein. Insbesondere können das Gebläse und das Werkzeug unabhängig voneinander genutzt werden. Ein entsprechend konfiguriertes Getriebe kann vorgesehen sein.

Die Küchenmaschine weist einen Tragegriff zum Tragen der Küchenmaschine auf und eine Absaugöffnung der Absaugvorrichtung ist in dem Tragegriff angeordnet, insbesondere in einem Bereich des Tragegriffs oberhalb des Speisenzubereitungsgefäßes. Die Absaugöffnung dient dem An- und Absaugen des entstehenden Dampfes und/oder entstehender Gerüche. Die Absaugöffnung ist insbesondere mit einem Abluftgitter gegen versehentliches Ansaugen und Hineinfallen von Gegenständen gesichert.

Der Tragegriff ist rohrartig, so dass der Abluftkanal durch den Tragegriff zur Absaugöffnung verlaufen kann. Insbesondere ist der Filter in einem unteren und/oder rückwärtigen Bereich der Küchenmaschine und/oder außerhalb des Tragegriffs angeordnet. Ein Absaugen ist gemäß dieser Ausgestaltung konstruktiv besonders einfach in eine bestehende Küchenmaschinenkonstruktion integrierbar. In einer Ausführungsform ist die Absaugöffnung der Absaugvorrichtung schlitzförmig ausgestaltet. Somit kann ein besonders schnell strömender Luftstrom erzeugt werden und der Dampf sehr effizient abgesaugt werden. Insbesondere beträgt die Schlitzweite mindestens 2 und/oder höchstens 10 mm. Vorzugsweise beträgt die Schlitzlänge mindestens 10 cm und/oder höchstens 20 cm. Vorzugsweise ist nur eine einzige Absaugöffnung vorgesehen. Die vorbeschriebenen Ausgestaltungen ermöglichen ein hinreichendes und gleichzeitig effizientes Ansaugen.

In einer Ausgestaltung weist die Küchenmaschine eine Einrichtung zur Abscheidung von Wasser aus dem Dampf und/oder einen Sammeltank zum Auffangen des abgeschiedenen Wassers auf. Insbesondere umfasst die Einrichtung zur Abscheidung von Wasser ein Kühlelement zur Kühlung des Dampfs zwecks Kondensation des im Dampf enthaltenen Wassers.

Das Kühlelement dient der Kühlung einer mit dem Dampf in Kontakt stehenden Oberfläche. An der Oberfläche kann somit Wasser kondensieren. Insbesondere wird als Kühlelement ein aktives Kühlelement wie beispielsweise ein Peltier-Element verwendet. Insbesondere kann die Küchenmaschine so ausgestaltet sein, dass das kondensierte Wasser schwerkraftbedingt in den Sammeltank fließt. Zu diesem Zweck ist zwischen der Oberfläche und dem Tank ein geeignet ausgerichteter Kanal zum Ableiten des Wasserdampfs angeordnet. Der Kanal kann Teil des Abluftkanals sein. Somit kann der Dampf durch einen in einem Abluftkanal erzeugten Luftstrom von einer Oberseite des Speisenzubereitungsgefäßes abgesaugt werden. Der Dampf kann in dem Abluftkanal durch das Kühlelement gekühlt werden, sodass enthaltenes Wasser kondensiert. Der Dampf kann anschließend aus einem Luftauslass wieder ausgegeben werden, beispielsweise an der Rückseite der Küchenmaschine und/oder seitlich. Der Einfachheit halber wird hier auch der Abluftstrom, aus dem das Wasser zumindest teilweise entfernt wurde, als Dampf bezeichnet. Das Auslassen des Dampfes kann gerichtet erfolgen. Die Filtervorrichtung ist bevorzugt stromabwärts der durch das Peltier-Element kühlbaren Oberfläche angeordnet. Die Lebensdauer kann so erhöht werden. Alternativ kann die Filtervorrichtung auch stromabwärts der durch das Peltier-Element kühlbaren Oberfläche angeordnet sein.

Der Sammeltank ist insbesondere herausnehmbar, sodass er auf einfache Weise ausgeleert werden kann. Die Küchenmaschine kann einen Sensor zur Ermittlung eines Füllstands des Sammeltanks aufweisen. Die Küchenmaschine kann dazu eingerichtet sein, bei einem vollen Sammeltank ein entsprechendes Signal an den Benutzer auszugeben, beispielsweise mittels einer Ausgabeeinheit der Küchenmaschine. Diese Ausgestaltung ermöglicht eine Ausgabe von Abluft mit geringem Wasseranteil. Dies ist vorteilhaft für Möbel wie beispielsweise Küchenschränke, bei denen Feuchtigkeit Schäden verursachen kann.

Nachfolgend werden Ausführungsbeispiele der Erfindung auch anhand von Figuren näher erläutert. Merkmale der Ausführungsbeispiele können einzeln oder in einer Mehrzahl miteinander und mit den beanspruchten und beschriebenen Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: eine Seitenansicht einer nicht von der Erfindung umfassten Filtervorrichtung auf einer Küchenmaschine,
- Figur 2:: eine Draufsicht der nicht von der Erfindung umfassten Filtervorrichtung aus Figur 1,
- Figur 3:: eine schematische Schnittzeichnung einer nicht von der Erfindung umfassten Filtervorrichtung,
- Figur 4:: eine schematische Schnittzeichnung einer weiteren, nicht von der Erfindung umfassten Filtervorrichtung,
- Figur 5:: eine schematische Seitenansicht einer nicht von der Erfindung umfassten Filtervorrichtung,
- Figur 6:: eine schematische Seitenansicht einer weiteren, nicht von der Erfindung umfassten Filtervorrichtung,
- Figur 7:: eine Ansicht eines Filterbeutels,
- Figur 8:: eine Ansicht eines Filterelements,
- Figur 9:: eine Explosionszeichnung einer nicht von der Erfindung umfassten Filtervorrichtung,
- Figur 10:: eine perspektivische Ansicht einer nicht von der Erfindung umfassten Filtervorrichtung,
- Figur 11:: eine Küchenmaschine mit einer Filtervorrichtung, und
- Figur 12:: eine Küchenmaschine mit einer anderen Filtervorrichtung.

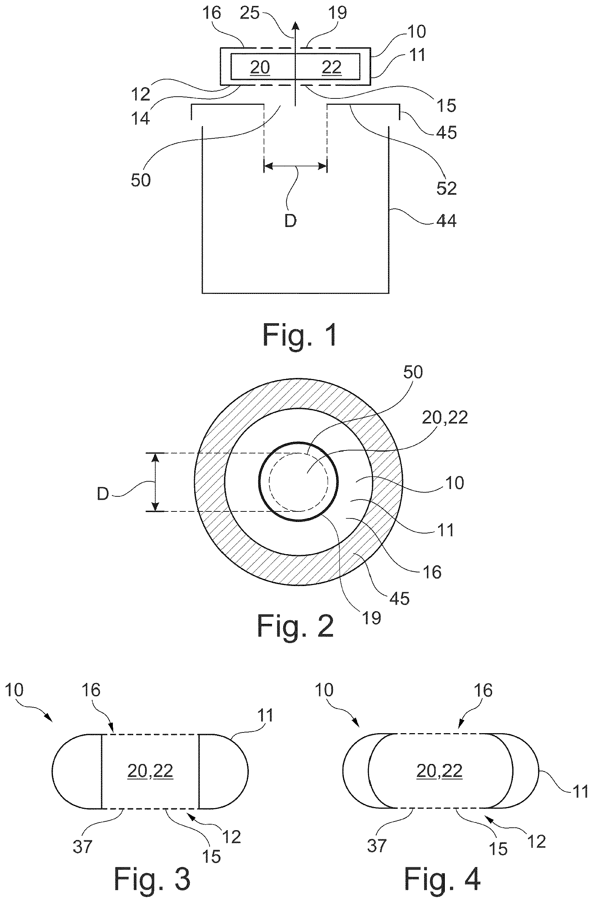

Figur 1 zeigt eine schematische Schnittzeichnung einer nicht von der Erfindung umfassten Filtervorrichtung 10, die auf einem Deckel 45 eines Speisenzubereitungsgefäßes 44 angeordnet ist. Figur 2 zeigt die dazugehörige Draufsicht. Die Filtervorrichtung 10 ist nach Art einer Explosionszeichnung oberhalb des Deckels 45 dargestellt und der Deckel 45 ist entsprechend oberhalb des Speisenzubereitungsgefäßes 44 dargestellt. Bei bestimmungsgemäßem Gebrauch liegt die Filtervorrichtung 10 mit der an ihrer Unterseite 12 befindlichen Kontaktfläche 14 flächig und umlaufend auf dem Deckel 45 auf. Der Deckel 45 bildet eine Öffnung 50 mit einem Durchmesser D ≤ 6 cm aus. Die Kontaktfläche 14 liegt bezogen auf die Hauptströmungsrichtung 25 radial umlaufend auf dem die Öffnung 50 ausbildenden Material 52 des Deckels 45 auf.

Die Filtervorrichtung umfasst ein Außengehäuse 11 aus Kunststoff mit einer Oberseite 16 und einer Unterseite 12. Das Außengehäuse 11 weist eine kreisrunde Form auf, die sich drehsymmetrisch in Bezug zur Hauptströmungsrichtung 25 erstreckt. An der Unterseite 12 ist mittig die kreisrunde Einströmöffnung 15 angeordnet und an der Oberseite ist mittig die kreisrunde Ausströmöffnung 19 angeordnet. Der bei einer Speisenzubereitung entstehende Dampf strömt durch die Öffnung 50 senkrecht nach oben, durch die Einströmöffnung 15 in den mit dem Filtermaterial 22 gefüllten Raum 20 im Inneren der Filtervorrichtung 10 und verlässt die Filtervorrichtung 10 senkrecht nach oben durch die Ausströmöffnung 19.

Die Filtervorrichtung 10 hat einen äußeren Durchmesser des Außengehäuses 11 von etwa 15 cm. Das Außengehäuse 11 ist aus hartem Kunststoff und kann nicht durch die Öffnung 50 durchgedrückt werden. Der genannte Durchmesser ist die größte Ausdehnung der Filtervorrichtung 10. Die Filtervorrichtung 10 überdeckt die Öffnung 50 vollständig. In Figur 2 ist der verdeckte Rand der Öffnung 50 gestrichelt dargestellt. Auch die Einströmöffnung 15 und die Ausströmöffnung 19 überdecken die Öffnung 50 vollständig.

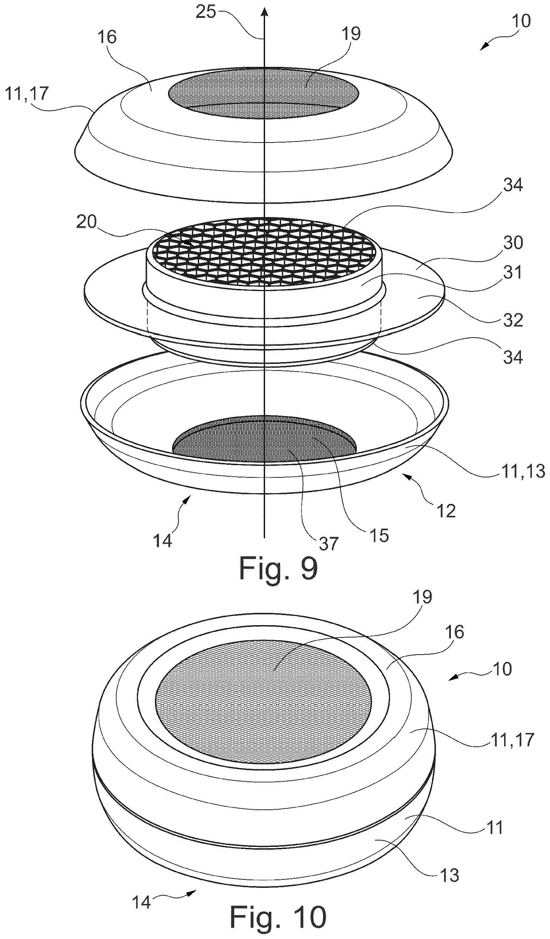

Die Figuren 3 und 4 zeigen Schnittdarstellungen verschiedener, nicht von der Erfindung umfasster Filtervorrichtungen 10. Diese sind ähnlich ausgestaltet wie die in den Figuren 1 und 2 gezeigten Filtervorrichtunten 10 und es wird daher im Übrigen auf die obigen Beschreibungen verwiesen. Die Filtervorrichtungen 10 umfassen jeweils ein Gehäuse 11, in dem der Raum 20 mit dem Filtermaterial 22 angeordnet ist. Das Gehäuse 11 ist analog zu den Figuren 1 und 2 drehsymmetrisch ausgebildet, jedoch an den Außenseiten konvex gewölbt. Die an der Unterseite 12 angeordnete Einströmöffnung 15 ist mit einem Gitter 37, nämlich einem Drahtgitter verschlossen. Hierauf wird mit Bezug zu Figur 9 unten näher eingegangen. Der Raum 20 mit dem Filtermaterial 22 ist in Figur 3 kreiszylindrisch geformt und verläuft mit einer geraden Wand zwischen der Einströmöffnung 15 und der Ausströmöffnung. In Figur 4 ist der Raum 20 dagegen bauchig geformt und verläuft mit konkav gekrümmten Außenwänden zwischen der Einströmöffnung 15 und der Ausströmöffnung. Auf diese Weise ist das Volumen des Raums 20 größer und das nicht genutzte Volumen, welches im Inneren der Filtervorrichtung 10, jedoch außerhalb des Raums 20 liegt, kleiner. Die Ausströmöffnung kann grundsätzlich auch seitlich angeordnet sein. Es können mehrere Ausströmöffnungen vorhanden sein, die z. B. um den Umfang verteilt angeordnet sein können.

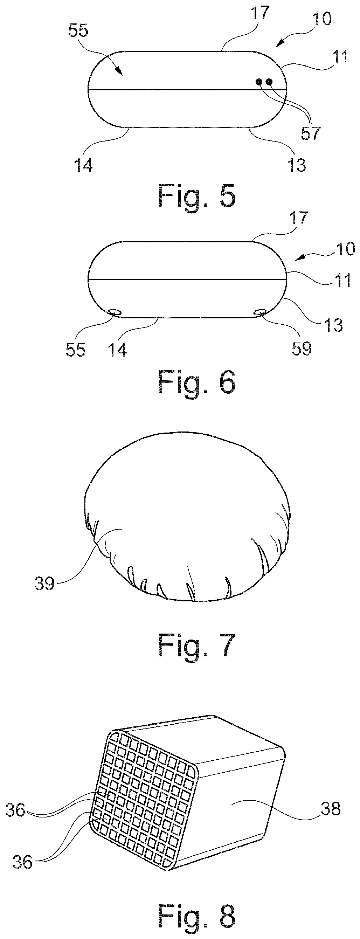

Die Figuren 5 und 6 zeigen Seitenansichten von Ausführungsbeispielen nicht von der Erfindung umfasster Filtervorrichtungen 10. Diese weisen ein zweigeteiltes Gehäuse 11 aus Kunststoff auf, welches aus einem Gehäuseoberteil 17 und einem Gehäuseunterteil 13 zusammengesetzt ist. Diese Teile können insbesondere mittels eines Bajonettverschlusses mechanisch miteinander verbunden und voneinander gelöst werden. Auf diese Weise kann das Gehäuse 11 geöffnet werden, um das Filtermaterial auszutauschen.

In Figur 5 umfasst die Filtervorrichtung 10 in ihrem Inneren ein Gebläse 55, das eine Luftströmung zwischen der Einströmöffnung an der Unterseite 12 und der Ausströmöffnung an der Oberseite realisiert. So wird das Durchströmen der Filtervorrichtung 10 mittels des Dampfs erleichtert. Die Filtervorrichtung 10 weist an der Außenseite des Gehäuses 11 zwei elektrische Kontakte 57 zur Energieversorgung des Elektromotors des Gebläses 55 auf. Alternativ kann im Inneren des Gehäuses zu diesem Zweck ein Akku angeordnet sein, der durch Öffnen des Gehäuses gewechselt werden kann.

In Figur 6 sind in dem Gehäuseunterteil 13 radial außen von der Einströmöffnung Löcher 59 angeordnet. Durch diese kann Kondenswasser ablaufen, das sich in einem peripheren Innenbereich der Filtervorrichtung 10 befindet, welcher außerhalb des Raums zur Aufnahme des Filtermaterials liegt.

Figur 7 zeigt schematisch einen Filterbeutel 39. Dieser weist einen kreisrunden Querschnitt auf und enthält granulierte Aktivkohle. Die Außenwand des Filterbeutels 39 ist durch ein dampfdurchlässiges Gewebe gebildet. Der Filterbeutel 39 wird in den Raum 20, der z. B. in den Figuren 1, 3 und 4 dargestellt ist, eingesetzt. Insbesondere kann das Gehäuse geöffnet und geschlossen werden, um den Filterbeutel 39 auszutauschen.

Figur 8 zeigt beispielhaft ein Filterelement 38. Dieses ist ein poröser Festkörper, insbesondere aus Aktivkohle, der von einer Vielzahl an Kanälen 36 durchzogen ist. Durch diese kann der Dampf strömen, um gefiltert zu werden. Das Filterelement 38 kann austauschbar in dem Raum angeordnet sein und/oder fest darin befestigt sein. In einer Ausgestaltung kann das Filtergehäuse 31 mit der inneren Kanalstruktur, das z. B. in Fig. 10 abgebildet ist, durch ein entsprechend dimensioniertes Filterelement 38 kostengünstig bereitgestellt werden.

Die Figuren 9 und 10 zeigen eine weitere Ausführungsform der nicht von der Erfindung umfassten Filtervorrichtung 10, wobei Figur 9 eine Explosionszeichnung ist. Die Filtervorrichtung 10 umfasst ein Gehäuse 11 mit einem Gehäuseoberteil 17 und einem Gehäuseunterteil 13 sowie eine dazwischen angeordnete, drehsymmetrisch ausgebildete Filtereinheit 30. Das Gehäuseoberteil 17 ist mit nicht dargestellten Befestigungsmitteln nach Art eines Bajonettverschlusses reversibel mit der Filtereinheit 30 verbindbar. Das Gehäuseunterteil 13 ist mit nicht dargestellten Befestigungsmitteln nach Art eines Bajonettverschlusses reversibel mit der Filtereinheit 30 verbindbar. Das Gehäuseoberteil 17 und das Gehäuseunterteil 13 sind insbesondere zumindest im Wesentlichen gleich ausgebildet.

An der von dem Gehäuseunterteil 13 ausgebildeten Unterseite 12 der Filtervorrichtung 10 befindet sich die Einströmöffnung 15, die mit einem Metallsieb verkleidet ist. Die Metallsiebmaschen bilden gewissermaßen eine Vielzahl an Einströmöffnungen 15. Das Metallsieb dient als Gitter 37, welches Fett- und Öltröpfchen abfängt oder zumindest teilweise daran hindert, zum Filtermaterial zu gelangen. Die Oberseite 16 mit der Ausströmöffnung 19 ist entsprechend ausgebildet. Insbesondere sind das Gehäuseoberteil 17 und das Gehäuseunterteil 13 so ausgebildet, dass sie abgewaschen und/oder in der Spülmaschine gereinigt werden können.

Die Filtereinheit 30 umfasst ein Filtergehäuse 31, welches das Filtermaterial enthält. Das Filtergehäuse 31 hat eine kreiszylinderförmige Wandung und erstreckt sich entlang der Hauptströmungsrichtung 25. Die obere und untere Öffnung des Filtergehäuses 31 ist mit einem eine Wabenstruktur aufweisenden Gitter verschlossen, sodass das Filtermaterial fest gehalten wird. Dampf kann durch die Öffnungen im Gitter ein- und ausströmen. In einer Ausgestaltung ist im Bereich der oberen und unteren Stirnseite der Wandung jeweils eine umlaufende Dichtung 34 angeordnet, welche den Raum 20 mit dem Filtermaterial von dem außerhalb des Raums 20 befindlichen peripheren Innenbereich der Filtervorrichtung 10 trennt. Die obere Dichtung drückt sich in der Schließstellung des Gehäuses 11 an das Gehäuseoberteil 17 und umschließt die Ausströmöffnung. Entsprechendes gilt für die untere Dichtung. So wird verhindert, dass Dampf in den peripheren Innenbereich gelangt.

Die Filtereinheit 30 umfasst einen von der Wandung des Filtergehäuses 31 radial nach außen ragenden Befestigungsabschnitt 32, der als umlaufende Scheibe ausgestaltet ist, die sich in einer horizontalen Ebene erstreckt. Der Befestigungsabschnitt 32 besteht aus Kunststoff, z. B. Plexiglas. Er ist zwischen dem Gehäuseoberteil 17 und dem Gehäuseunterteil 13 angeordnet. Er wird von dem Außengehäuse 11 gehalten.

Alternativ oder ergänzend kann der Befestigungsabschnitt 31 auch der vereinfachten Handhabung dienen, beispielsweise beim Wechsel der Filtereinheit 30. Figur 10 zeigt die Filtervorrichtung 10, insbesondere diejenige aus Figur 9, in der Schließstellung.

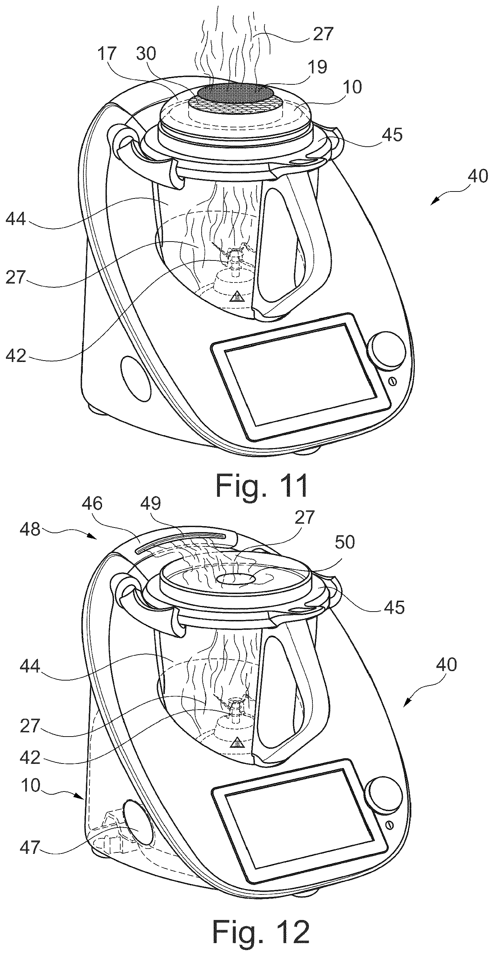

Figur 11 zeigt eine nicht von der Erfindung umfasste Küchenmaschine 40 zum Zubereiten einer Speise in einem Speisenzubereitungsgefäß 44. Die Küchenmaschine 40 umfasst ein Heizelement zum Erhitzen der Speise in dem Speisenzubereitungsgefäß 44 und ein drehbares Werkzeug 42 zum Mischen oder Zerkleinern der Speise in dem Speisenzubereitungsgefäß 44 sowie das abnehmbare Speisenzubereitungsgefäß 44. Die Küchenmaschine 40 umfasst ferner die nicht von der Erfindung umfasste Filtervorrichtung 10, beispielsweise gemäß Figur 10, zum Filtern von während eines Speisenzubereitungsvorgangs entstehendem Dampf 27 aus dem Speisenzubereitungsgefäß 44. Für eine bessere Übersichtlichkeit sind das Speisenzubereitungsgefäß 44 und das Gehäuseoberteil 17 der Filtervorrichtung 10 teilweise transparent dargestellt.

Die Küchenmaschine 40 umfasst einen Deckel 45, der lösbar das Speisenzubereitungsgefäß 44 abdeckt und eine Öffnung mit einem Durchmesser von maximal 6 cm aufweist. Die Filtervorrichtung 10 ist auf dem Deckel 45 positioniert und deckt die Öffnung vollständig ab. Eine umlaufende Kontaktfläche der Filtervorrichtung 10 liegt auf dem Material 52 des Deckels 45 flächig und weitgehend abdichtend auf, so dass der Dampf 27, der das Speisenzubereitungsgefäß 44 durch die Öffnung nach oben verlässt, nahezu vollständig gefiltert wird. Er strömt in die Filtervorrichtung 10 ein, durchströmt die Filtereinheit 30 mit dem Filtermaterial und verlässt die Filtervorrichtung 10 nach oben durch die Ausströmöffnung 19 in gereinigter Form.

Figur 12 zeigt eine erfindungsgemäße Küchenmaschine 40 mit einer Absaugvorrichtung 48. Die Küchenmaschine 40 ist ausgestaltet wie die in Figur 11 gezeigte Küchenmaschine 40, enthält aber keine auf dem Deckel 45 positionierte Filtervorrichtung 10. Die Filtervorrichtung 10 ist in der hier gezeigten Ausgestaltung im Inneren des Gehäuses der Küchenmaschine 40 angeordnet. Sie kann austauschbar und von außen zugänglich ausgestaltet sein, sodass sie bei beladenem Filtermaterial ausgewechselt werden kann.

Die Absaugvorrichtung 48 umfasst eine Absaugöffnung 49, die im Tragegriff 46 der Küchenmaschine 40 angeordnet ist. Durch diese wird entstehender Dampf 27 eingesaugt. Die Absaugöffnung 49 ist schlitzförmig ausgebildet und folgt der gebogenen Kontur des Tragegriffs 46. Ein Abluftgitter schützt die Absaugöffnung 49 und bildet einen Teil der äußeren Kontur des Tragegriffs 46 aus. Der eingesaugte Dampf 27 wird durch einen Abluftkanal im Inneren des Tragegriffs sowie des Gehäuses der Küchenmaschine 40 zur Filtervorrichtung 10 geleitet. Ein Luftstrom zum Ansaugen des Dampfs wird durch ein Gebläse erzeugt, welches von einem Elektromotor angetrieben wird. Dieser kann der Elektromotor zum Antreiben des Werkzeugs 42 oder ein separater Elektromotor sein.

Der so geförderte Dampf 27 strömt durch eine Einströmöffnung in die Filtervorrichtung, wird durch das in der Filtervorrichtung befindlichen Filtermaterial gefiltert und strömt durch eine Ausströmöffnung wieder aus der Filtervorrichtung heraus. Die Absaugvorrichtung kann so beschaffen sein, dass der gefilterte Dampf 27 aus der Ausströmöffnung unmittelbar nach außen ausströmt. In diesem Fall ist die Ausströmöffnung der Filtervorrichtung gleichzeitig der Luftauslass 47 der Absaugvorrichtung. Alternativ kann zwischen der Ausströmöffnung und dem Luftauslass 47 noch ein Abluftkanal angeordnet sein. Die Küchenmaschine kann ferner eine Einrichtung zur Abscheidung von Wasser aus dem Dampf 27 umfassen, welches ein Kühlelement zur Kühlung des Dampfs zwecks Kondensation des enthaltenen Wassers umfassen kann.

### Bezugszeichenliste

| | |
|---|---|
| Filtervorrichtung | 10 |
| Außengehäuse | 11 |
| Unterseite | 12 |
| Gehäuseunterteil | 13 |
| Kontaktfläche | 14 |
| Einströmöffnung | 15 |
| Oberseite | 16 |
| Gehäuseoberteil | 17 |
| Ausströmöffnung | 19 |
| Raum | 20 |
| Filtermaterial | 22 |
| Hauptströmungsrichtung | 25 |
| Dampf | 27 |
| größte Ausdehnung | 29 |
| Filtereinheit | 30 |
| Filtergehäuse | 31 |
| Befestigungsabschnitt | 32 |
| Dichtung | 34 |
| Kanal | 36 |
| Gitter | 37 |
| Filterelement | 38 |
| Filterbeutel | 39 |
| Küchenmaschine | 40 |
| Werkzeug | 42 |
| Speisenzubereitungsgefäß | 44 |
| Deckel | 45 |
| Tragegriff | 46 |
| Luftauslass | 47 |
| Absaugvorrichtung | 48 |
| Absaugöffnung | 49 |
| Öffnung | 50 |
| Material | 52 |
| Durchmesser | D |
| Gebläse | 55 |
| Kontakte | 57 |
| Loch | 59 |

## Patentansprüche

1. Küchenmaschine (40) zum Zubereiten einer Speise in einem Speisenzubereitungsgefäß (44), umfassend ein Heizelement zum Erhitzen einer Speise in dem Speisenzubereitungsgefäß (44) und ein Werkzeug (42) zum Mischen oder Zerkleinern der Speise in dem Speisenzubereitungsgefäß (44) sowie das abnehmbare Speisenzubereitungsgefäß (44), wobei die Küchenmaschine (40) eine Filtervorrichtung (10) zum Filtern von Dampf (27) aus dem Speisenzubereitungsgefäß (44) während eines Speisenzubereitungsvorgangs umfasst, wobei die Küchenmaschine (40) eine Absaugvorrichtung (48) aufweist, mit der während eines Speisenzubereitungsvorgangs aus dem Speisenzubereitungsgefäß (44) entweichender Dampf (27) abgesaugt und zu der Filtervorrichtung (10) geführt werden kann,
**dadurch gekennzeichnet, dass** die Küchenmaschine (40) einen Tragegriff (46) zum Tragen der Küchenmaschine (40) aufweist und eine Absaugöffnung (49) der Absaugvorrichtung (48) in dem Tragegriff (46) angeordnet ist.

2. Küchenmaschine (40) nach dem vorhergehenden Anspruch, **dadurch gekennzeichnet, dass** die Küchenmaschine (40) einen Elektromotor zum Antreiben des Werkzeugs (42) aufweist, der auch zum Antreiben eines Gebläses der Absaugvorrichtung (48) eingerichtet ist.

3. Küchenmaschine (40) nach einem der zwei vorhergehenden Ansprüche, **dadurch gekennzeichnet, dass** die Küchenmaschine (40) eine Einrichtung zur Abscheidung von Wasser aus dem Dampf (27) sowie einen Sammeltank zum Auffangen des abgeschiedenen Wassers aufweist, wobei die Einrichtung zur Abscheidung von Wasser insbesondere ein Kühlelement zur Kühlung des Dampfs (27) zwecks Kondensation des Wassers umfasst.

## Claims

1. Kitchen appliance (40) for preparing food in a food preparation vessel (44), comprising a heating element for heating food in the food preparation vessel (44) and a tool (42) for mixing or comminuting the food in the food preparation vessel (44) and the removable food preparation vessel (44), wherein the kitchen appliance (40) comprises a filter apparatus (10) for filtering steam (27) from the food preparation vessel (44) during a food preparation operation, wherein the kitchen appliance (40) has a suction device (48) by which steam (27) released from the food preparation vessel (44) during a food preparation operation can be sucked off and directed to the filter apparatus (10), **characterized in that** the kitchen appliance (40) has a carrying handle (46) for carrying the kitchen appliance (40) and **in that** a suction opening (49) of the suction device (48) is arranged in the carrying handle (46).

2. Kitchen appliance (40) according to the preceding claim, **characterized in that** the kitchen appliance (40) has an electric motor for driving the tool (42), which is also configured to drive a blower of the suction device (48).

3. Kitchen appliance (40) according to one of the two preceding claims, **characterized in that** the kitchen appliance (40) has a device for separating water from the steam (27) and a collecting tank for collecting the separated water, wherein the device for separating water comprises in particular a cooling element for cooling the steam (27) for condensing the water.

## Revendications

1. Machine de cuisine (40) pour préparer un aliment dans un récipient de préparation d'aliment (44), comprenant un élément chauffant pour chauffer un aliment dans le récipient de préparation d'aliments (44) et un outil (42) pour mélanger ou broyer l'aliment dans le récipient de préparation d'aliments (44) ainsi que le récipient de préparation d'aliments amovible (44), dans laquelle la machine de cuisine (40) comprend un dispositif de filtration (10) pour filtrer la vapeur (27) provenant du récipient de préparation d'aliments (44) pendant un processus de préparation d'aliments, dans laquelle la machine de cuisine (40) présente un dispositif d'aspiration (48) avec lequel la vapeur (27) qui s'échappe du récipient de préparation d'aliments (44) pendant un processus de préparation d'aliments peut être aspirée et guidée vers le dispositif de filtration (10),
**caractérisée en ce que** la machine de cuisine (40) présente une poignée de transport (46) pour porter la machine de cuisine (40) et une ouverture d'aspiration (49) du dispositif d'aspiration (48) est disposée dans la poignée de transport (46).

2. Machine de cuisine (40) selon la revendication précédente, **caractérisée en ce que** la machine de cuisine (40) comprend un moteur électrique pour entraîner l'outil (42), qui est également configuré pour l'entraînement d'une soufflante du dispositif d'aspiration (48).

3. Machine de cuisine (40) selon l'une des deux revendications précédentes, **caractérisée en ce que** la machine de cuisine (40) présente un dispositif de séparation de l'eau de la vapeur (27) ainsi qu'un réservoir de collecte de l'eau séparée, dans laquelle le dispositif de séparation de l'eau comporte notamment un élément de refroidissement pour le refroidissement de la vapeur (27) en vue de la condensation de l'eau.
